# EUROPÄISCHE PATENTANMELDUNG

(11) **EP 2 444 229 A1**
(43) Veröffentlichungstag der Anmeldung: **25.04.2012**
(21) Anmeldenummer: 10013916.1
(22) Anmeldetag: 24.10.2010
(51) Int. Cl.: B29C 47/16, B29C 47/92

(54) **Zustellbarer Kalibrierroboter für Breitschlitz-Düse**

(71) Anmelder: MAKU AG, 6374 Buochs (CH)
(72) Erfinder: Maeder, Robert, 6374 Buochs (CH)
(74) Vertreter: Arato, Laszlo

(57) **Zusammenfassung**

Ein zustellbarer Kalibrierroboter für Breitschlitz-Düsen in Portalbauweise vorgeschlagen, der sich mit seiner Brücke (14) über die Breitschlitz-Düse (1) erstreckt und portalartig ausgebildet ist, auf Stützen (12.1,12.2) und mit Schienen (3.1,3.2) geführten Böcken (11.1,11.2) ruht, und durch lösbare Arretierungen (13.1,13.2) verbundbar ist, vorzugsweise einen Elektroschrauber (22) für die Einstellung der Regulierschrauben der Breitschlitzlippe (4) und einen Elektroschrauber für die Einstellung der Regulierschrauben des Staubalkens (5) am Portalschlitten (20) aufweist.

## Beschreibung

Die Erfindung betrifft einen zustellbaren Kalibrierroboter für Breitschlitz-Düse, gemäss den Patentansprüchen.

Breitschlitz-Düsen dienen der Herstellung von Tafeln und Flach-Folien mittels Schmelzen durch einen zentrisch zugeführten Verteilkanal. Damit die Dicke des Presslings gleich bleibt, muss die Fliessmenge an jeder Stelle der Austrittsebene der Düse gleich sein. Um dieser Forderung zu entsprechen, wird der Verteilkanal der Schmelze kleiderbügelförmig ausgebildet und der längliche Spalt im Düsenaustritt so beendet, dass er zwischen einer festen und einer deformierbaren Breitschlitzlippe liegt. Als weitere konstruktive Massnahme kann je nach Bedarf zusätzlich die Spaltweite der länglichen Breitschlitz-Düse mit einem mit der Breitschlitzlippe parallelen Staubalken verengt und damit die Verteilung der Schmelze in der Düse verbessert werden. Um die örtliche Dicke des Extraktes zu kalibrieren, werden entlang der Spaltweite der deformierbaren Breitschlitzlippe in regelmässigen Abständen Spannmittel verteilt, die herkömmlicherweise Gewindebolzen wie Schrauben mit Sechskant-oder Innensechskantkopf sind, und beim Einfahren der Breitschlitz-Düse mit Handwerkzeug verstellt werden.

Die fortlaufende Dickenmessung in Querrichtung zur Folienbahn ermöglicht die fortlaufende thermo-mechanische (US 29 38 231), piezotranslatorische (DE 34 27 912) oder elektromechanische (DE 41 06 487) Kalibrierung der Breitschlitz-Düsen, indem die Breitschlitzlippe in Funktion der Abweichung der örtlichen Dicke mit den Spannmitteln vom IST- auf SOLL-Mass verstellt und somit der Düsenschlitz mehr oder weniger zusammengepresst wird. Die häufige Anpassung der örtlichen Schlitzbreite ergab einen Sprung der Stetigkeit der angestrebten Dicken, so dass man die stetig kalibrierten Breitschlitz-Düsen treffend Automatikdüsen nennt. Die Vorteile der angestrebten Innovation der Automatikdüsen waren die gleichmässige Dicke und die gleichmässige Festigkeit der Folien trotz wesentlicher Werkstoffersparnis. Der Nachteil der Automatikdüse ist ihr Preis, denn die Ausrüstung der vielen Andruckstellen mit geregelten Antriebsachsen summiert sich. Ein weiterer Nachteil der Automatikdüsen äussert sich im Betrieb, denn die Anbauten der Automatik erhöhen; die beheizte Masse der Düse, den Aufwand an Inspektion, den Aufwand an Reinigung, Wartung, Revision und an der Erneuerung der Teile gegenüber den konventionellen Düsen.

Aufgabe der vorliegenden Erfindung ist, die herkömmlichen Breitschlitz-Düsen durch ad hoc zustellbare Kalibrierroboter zu Automatikdüsen um-, respektive aufzurüsten.
Mit der ad hoc Aufrüstung von herkömmlichen Breitschlitz-Düsen zu Automatikdüsen sind adäquate Änderungen des Betriebsverhaltens ohne bleibende Änderungen jeglicher Art an der Breitschlitz-Düse gemeint. Das heisst, dass die Umwandlung der Breitschlitz-Düse zur Automatikdüse am Standort und ohne Änderungen an der Breitschlitzdüse geschehen kann, und dabei nur das Umfeld der Breitschlitz-Düse verändert wird. Dank dieser Merkmale der Erfindung ist der Aufstieg der herkömmlichen Breitschlitz-Düsen in die noble Liga der Automatikdüsen ohne Risiken und zu günstigen Konditionen möglich.

Der Vorteil der Erfindung ist, dass die Aufrüstung der herkömmlichen Breitschlitz-Düsen zu Automatikdüsen, ohne die vorhandene Wärmeisolation zu schmälern und ohne Mehraufwand an Inspektion, Reinigung, Revision und Erneuerung der Teile der konventionellen Wartung zu erhöhen, möglich wird, weil die umfangreiche Mechanik der Automatikdüsen nicht im Weg steht. Zugleich ist die Erfindung ein Schritt in die Richtung der Vorgaben der aktuellen Klima- und Energiediskussion, weil die Zeit des Einstellens der Düse beim Anfahren, um eine Folie im engsten Toleranzbereich herzustellen, verkürzt wird, so dass kein Material und Energie vergeudet wird, was einer bis zu 10 % höheren Produktionsrate gleich kommt. Somit sind mit der Erfindung bei 24h Betrieb, bei 1 t/h Ausstoss 1'500.-€/d Einsparung und in 10 Monaten die Amortisation der Umrüstung der Breitschlitz-Düse zur Automatikdüse möglich.

Nachfolgend wird die Erfindung mit der Um- und Aufrüstung einer herkömmlichen Breitschlitz-Düse dargestellt. Die Zeichnungen zeigen:
- Fig.1: die Ansicht einer Breitschlitz-Düse mit dem zustellbaren Kalibrierroboter in Arbeitsstellung,
- Fig.2: das Schema des zustellbaren Kalibrierroboters,
- Fig.3: Konstruktionsdetails des zustellbaren Kalibrierroboters.

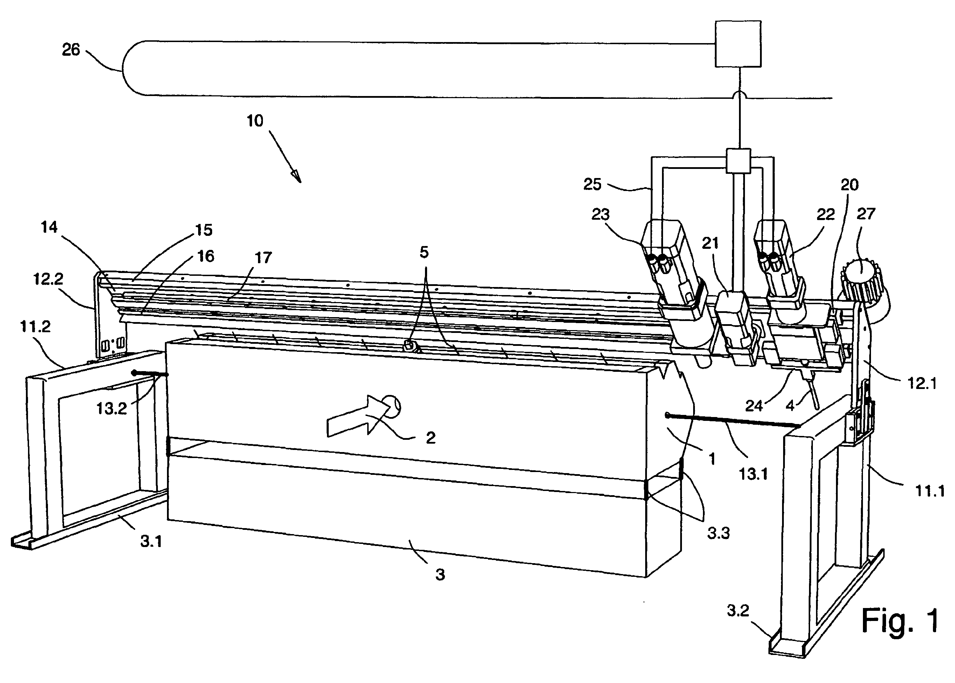

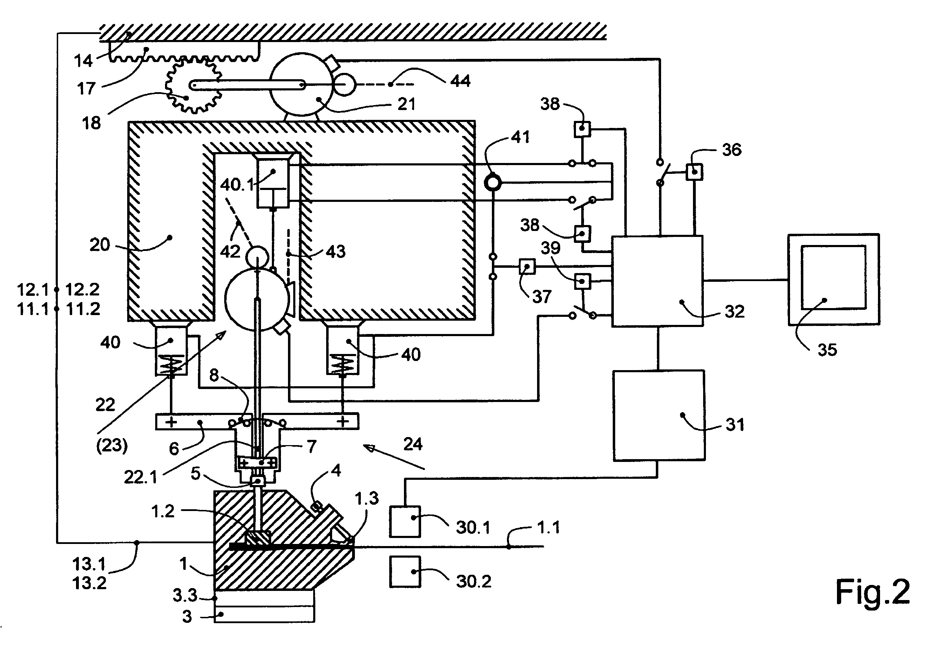

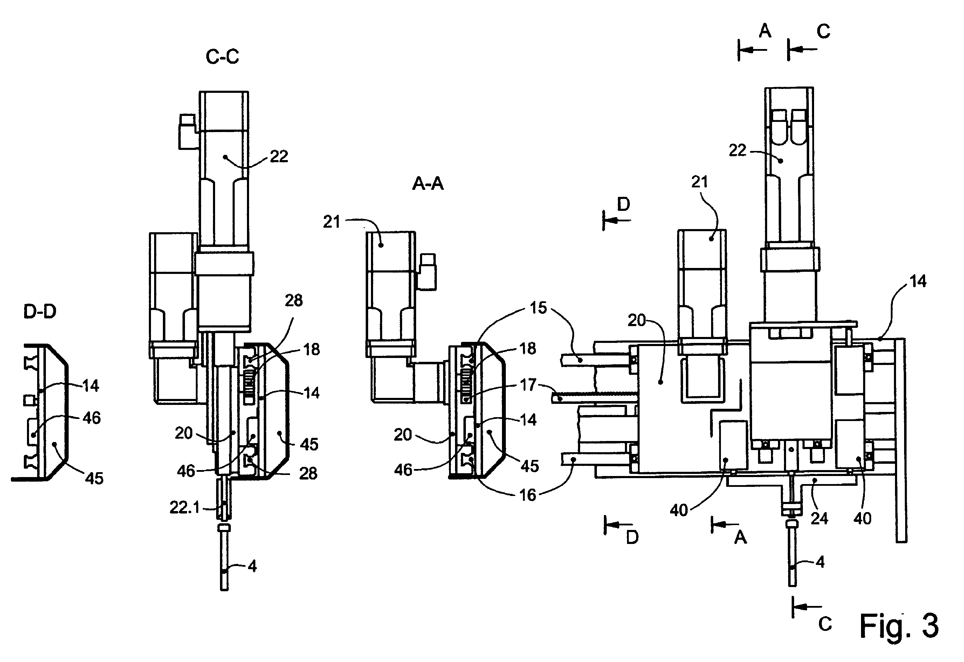

Die Figur 1 zeigt beispielsweise eine Breitschlitz-Düse 1 für die Bahnbreite von etwa 1,5 m Breite von der Beschickungsseite her gesehen, mit der Zuleitung der gepressten Schmelze 2 von einem nicht gezeigten Extruder. Da die Breitschlitz-Düse 1 über die Temperatur der Schmelze erhitzt sein muss, sind im Inneren der Breitschlitz-Düse nicht gezeigte elektrische Heizkörper installiert, die die Temperatur, je nach Art der Schmelze, auf etwa 180-280°C erhöhen. Die Wärmeverluste der Breitschlitz-Düse 1 verringern nicht gezeigte Isolierplatten, die für die Abdeckung der planen Flächen der Breitschlitz-Düse 1 gut geeignet sind. Aus demselben Grund wird die Breitschlitz-Düse 1 bloss an ihren Ecken auf die Stützen 3.3 des Stützgestells 3 gelegt. Das Stützgestell 3, das in der Figur 1 nur andeutungsweise dargestellt ist, lässt die Nivellierung der Breitschlitz-Düse 1 mit den Stützen 3.3, die vorzugsweise Verbundanker mit Einstellmuttern sind, zu.
Der Portalroboter 10 überspannt die Breitschlitz-Düse 1 und ruht auf den Stützen 12.1, 12.2 mit den Böcken 11.1, 11.2, die in den Schienen 3.1, 3.2 geführt sind, wobei die mit Stützen 12.1, 12.2 und mit Schienen 3.1, 3.2 geführten Böcke 11.1, 11.2 senkrecht zur Breitschlitz-Düse 1 ausgerichtet sind. Der Portalroboter 10 ist mit lösbaren Arretierungen 13.1, 13.2 mit der Breitschlitz-Düse 1 so ausgerichtet und so verbundbar, dass die er auf Stützen (12.1, 12.2) und mit Schienen (3.1, 3.2) geführten Böcken (11.1, 11.2) ruht, und dass die mit Stützen (12.1, 12.2) und mit Schienen (3.1, 3.2) geführten Böcke (11.1, 11.2) senkrecht und so genau zur Breitschlitzdüse (1) ausgerichtet und durch lösbare Arretierungen (13.1, 13.2) so verbundbar sind, dass die Verstellung der Regulierschrauben der Breitschlitzlippe (4) und der Regulierschrauben des Staubalkens (5) je einen einzigen verfahrbaren Elektroschrauber (22, 23) braucht.
Für die Kalibrierung der Breitschlitz-Düse 1 dienen etwa 15 Staubalkenschrauben 4 und für die Kalibrierung der Breitschlitzlippe, auf der verdeckten Seite, etwa 60 Stück M10 Regulierungsschrauben 5 (vgl. 1.3 der Fig. 2 und 3).
Die Schienen (3.1, 3.2) oder analoge Führungsmitteln können an Stelle des Bodens auf die Stützen (12.1, 12.2) verlegt sein und die Verschiebung des Kalibrierroboters (10) kann vorteilhafterweise mit elektrischen, pneumatischen oder elektropneumatischen Mitteln erfolgen.

Die Fig. 2 zeigt die schematische Darstellung des Kalibrierroboters beim Auspressen der Folie 1.1 aus der Breitschlitz-Düse 1. Für die Dickenmessung wird beispielsweise die Absorptionsmessung verwendet, dass heisst auf beiden Seiten der Folie 1.1 befindet sich übereinander die Strahlungsquelle 30.2 und der Absorptionssensor 30.1, mit welchen die äquivalente Dicke der Folie 1.1 laufend für die jeweiligen Regulierschrauben der Breitschlitzlippe 4 und des Staubalkens 5 ermittelt wird. Aus der Messung des Absorptionssensors 30.1, der entlang der Breitschlitz-Düse 1 quer zur Bahn der Folie 1.1 hin und her pendelt, errechnet der Rechner 31 für jede einzelne Spannstelle die Abweichung der Dicke vom Sollwert und übergibt diese dem Rechner 32, der beispielsweise eine speicherprogrammierbare Steuerung (SPS) ist.

Die Dicke der Folie 1.1 wird durch die Verstellung der Regulierschrauben 4 und 5 mit den Elektroschraubern 22 und 23 örtlich erzwungen. Für die Zustellung der Elektroschrauber 22 (23) zur Regulierschraube 4 dient der Portalschlitten 20, der auf der Brücke 14 auf zwei Schienen (15, 16) auf vier Gleitlagern (28) läuft und über ein Zahnrad 18 vom Schlittenantrieb 21 bewegt wird. Um die zu verstellende Regulierschraube 5 zu finden, ist die Position der Regulierschraube 5 vom Rechner 32 vorgegeben und vom Koordinatenwandler 33 so erfasst, dass die Bewegung des Portalschlittens 20 über der Regulierschraube 5 dann aufhört, wenn der Sechskant- oder der Innensechskantschlüssel (auch Inbusschlüssel oder "Allen key" genannt) 22.1 des Elektroschraubers 22 über der Regulierschraube 5 steht.

Sobald der Schlittenantrieb 21 diese Position erreicht hat, wird die Speisung des Schlittenantriebes 21 durch Abschalten des Schalters 36 von der Steuerung getrennt und damit der Portalschlitten 20 für die lokale Positionierung des Elektroschraubers 22 freigegeben. Das Fassen von Sechskantschrauben wird vom Elektroschrauber 22 (23) mit Steckschlüsseln vorgenommen. Für den Aussensechskant sind Rohrschlüssel und für den Innensechskannt Inbusschlüssel geeignet. Weil das Einstecken des Inbusschlüssels mit mechanisch zugeführten Elektroschraubern in die Inbusschraube schwieriger ist als das Erfassen des Aussensechskants eines Schraubenkopfes mit dem Rohrschlüssel, wird die Zentrierung des Inbusschlüssels an Hand der Fig. 2, mit dem Inbusschlüssel und dem Staubalken 1.2 gezeigt. Vom Moment der Freigabe des Portalschlittens 20 der Steuerung 32 orientiert sich die Feinpositionierung des Inbusschlüssels des Elektroschraubers 22 an der Zylinderfläche des Schraubenkopfes der Regulierschraube 5.

Gemäss der Figur 2 besteht die Zentriervorrichtung 24 aus zwei L-förmig gekröpften Hebeln 6, die gespiegelt angeordnet und miteinander im Endbereich des kürzeren Armes durch zwei eingelassene Laschen 7 mit durchgehenden Stiften mit der Feder 8 so verbunden sind, dass es zwischen den Hebeln 6 Platz gibt für den Schlüssel 22.1 des Elektroschraubers 22 und die Enden der zugewandten kürzeren Seiten der Hebel 6 für die Aufnahme des Schraubenkopfes der Regulierschraube 5 zylindrisch vertieft sind. Die längeren Arme der Hebel 6 der Zentriervorrichtung sind locker durch einen zwischen vier Stiften gespreizten Federdraht oder eine nicht gezeigte Spiralzugfeder gehalten, damit die Aussparung für das Hereinschlüpfen des Kopfes der Regulierschraube 5 bei der Aktivierung der Pneumatikzylinder 40.1 (40.2) erleichtert ist.

Die Aktivierung der Zentriervorrichtung 24 steuert der Rechner 32 indem das Ventil 37 geschlossen und von der Druckluftquelle 41 Pressluft zu den beiden Druckzylindern 40.1 (40.2) fliesst. Anschliessend wird der Elektroschrauber 22 von der Druckluftquelle 41 über das von der Steuerung 32 betätigte Druckluft-Ventil 37 (38) durch die Betätigung des Pneumatikzylinders 40.1 so verschoben, dass das Schraubwerkzeug 9 des Elektroschraubers 22, der ein Inbusschlüssel 22.1 ist, in den Kopf der Regulierschraube des Staubalkens 5 passt.

Über die Breitschlitz-Düse 1 erstreckt sich der Kalibrierroboter 10. Die tragenden Teile des Kalibrierroboters 10, die sich portalartig fügen, sind die Böcke 11.1 11.2.1, 11.1 11.2.2, mit den Stützen 12.1 12.2, die Brücke 14, mit den Schienen 15, 16 und der Zahnstange 17, die auf der Brücke 14 planparallel verlaufen und den Portalschlitten 20 mit dem Schlittenantrieb 21 und dem Elektroschrauber 22 (23) tragen.

Auf der Brücke 14 läuft der Portalschlitten 20, vom Schlittenantrieb 21 angetrieben, der mit einem Winkelgetriebe über ein verdecktes Zahnrad (18) auf die Zahnstange 17 greift. Die Brücke 14 trägt den Elektroschrauber 22 mit der Zentriervorrichtung 24 und, als Hinweis ihrer Aufgabe, eine Regulierschraube der Breitschlitzlippe 4.
Zur Kühlung der Brücke 14 dient das Gebläse 27, das die Luft aus der Umgebung in die Kühlkanäle 45, 46 drückt.

Die Figur 3 zeigt die Schnitte des Portalschlittens 20 mit dem Schlittenantrieb 21, dem Elektroschrauber 22 und der Zentriervorrichtung 24, sowie ein gekürztes Stück der Brücke 14 und eine Regulierschraube 4 mit den Schnitten A-A, C-C und D-D.

## Patentansprüche

1. Zustellbare Kalibrierroboter (10) für Breitschlitzdüsen (1) mit mindestens einem Staubalken (1.2) und mindestens einer Breitschlitzlippe (1.3) **dadurch gekennzeichnet, dass** der Kalibrierroboter (10) portalartig ausgebildet ist, auf Stützen (12.1, 12.2) und mit Schienen (3.1, 3.2) geführten Böcken (11.1, 11.2) ruht, und dass die mit Stützen (12.1, 12.2) und mit Schienen (3.1, 3.2) geführten Böcke (11.1, 11.2) senkrecht zur Breitschlitzdüse (1) ausgerichtet, und durch lösbare Arretierungen (13.1, 13.2) so verbundbar sind, dass die Verstellung der Regulierschrauben der Breitschlitzlippe (4) und die Regulierschrauben des Staubalkens (5) vorzugsweise je ein einziger zuführbarer Elektroschrauber (22, 23) braucht.

2. Zustellbare Kalibrierroboter (10) für Breitschlitzdüsen nach Anspruch 1 **dadurch gekennzeichnet, dass** die Schienen (3.1, 3.2) oder analoge Führungsmitteln auf die Stützen (12.1, 12.2) liegen und für die Verschiebung des zustellbaren Kalibrierroboters (10) elektrische, pneumatische oder elektropneumatische Mittel dienen.

3. Zustellbare Kalibrierroboter für Breitschlitzdüsen nach den Ansprüchen 1 und 2 **dadurch gekennzeichnet, dass** der oder die Elektroschrauber (22, 23) einzeln oder gemeinsam auf einem Portalschlitten (20) aufgebaut sind und der Portalschlitten (20) auf den Schienen (15, 16) verschiebbar von den Lagern (28) getragen und vom einem Schlittenantrieb (21), der mit einem Zahnrad (18) auf die Zahnstange (17) greift, angetrieben wird und die Schienen (15, 16) auf einer Brücke (14) so aufgebaut sind, dass die Brücke (14) an beiden Enden mit den Stützen (12.1, 12.2) auf den Böcken (11.1 11.2.1, 11.1 11.2.2) lagert und dabei die Breitschlitzdüse (1) überdeckt, so dass der Elektroschrauber (22, 23) die Regulierschrauben (4, 5) wahlweise anfahren kann.

4. Zustellbare Kalibrierroboter für Breitschlitzdüsen nach Anspruch 3 **dadurch gekennzeichnet, dass** der Schlittenantrieb (21) über dem Zahnrad (18) und der Zahnstange (17) mit der Brücke (14) und über dem Positionsgeber (44) mit dem Rechner (32) verbunden ist, so dass der Rechner (32) die Orte der Regulierschrauben (4, 5) der Breitschlitzdüse (1) kennt und die Position der Regulierschrauben (4, 5) wahlweise anfahren kann.

5. Zustellbare Kalibrierroboter für Breitschlitzdüsen nach Anspruch 4 **dadurch gekennzeichnet, dass** für die Ermittlung des IST-Wertes der Dicke der Folie 1 je Regulierschraube (4, 5) eine Strahlungsquelle (30.2) und ein Absorptionssensor (30.1) und für die Berechnung der Differenz von SOLL- und IST-WERT der Dicke der Folie 1.1 ein Rechner (31) verwendet und die Differenz an den Rechner (32) übermittelt wird.

6. Zustellbare Kalibrierroboter für Breitschlitzdüsen nach den Ansprüchen 3 bis 5 **dadurch gekennzeichnet, dass** die Steuerung? (32) die Befindlichkeit des Portalschlittens (20) steuert und die Ortung des Positionsgebers (44) überwacht und, sobald der Portalschlitten (20) mit den zuständigen Elektroschraubern (22, 23) die Position der zu verstellenden Regulierschraube (4, 5) erreicht hat, die Kontrolle mit dem Schalter (36) unterbricht und den Portalschlitten (20) freigibt.

7. Zustellbare Kalibrierroboter für Breitschlitzdüsen nach den Ansprüchen 3 bis 6 **dadurch gekennzeichnet, dass** für die Zentrierung der Regulierschraube der Breitschlitzlippe (4) zwei Aktoren, die vorzugsweise Pneumatikzylinder (40.1 ) sind, gebraucht werden, die auf zwei "L"-förmigen Hebeln (6), die beidseitig mit zwei Laschen (7) zangenartig verbunden und an ihren äusseren Enden für die Aufnahme des Zylinderkopfes der Schraube (4) ausgehöhlt sind, wirken.

8. Zustellbare Kalibrierroboter für Breitschlitzdüsen nach den Ansprüchen 3 bis 7 **dadurch gekennzeichnet, dass** der Elektroschrauber (22) mit dem Pneumatikzylinder (40.1) verschiebbar ausgestaltet auf dem Portalschlitten (20) angeordnet und mit Sensoren für die Registrierung der Drehungen (42) und der Verschiebung (43) des Elektroschraubers (22) ausgerüstet ist.

9. Zustellbare Kalibrierroboter für Breitschlitzdüsen nach den Ansprüchen 7 und 8 **dadurch gekennzeichnet, dass** die Zentrierung der Elektroschrauber (22) und der Vorschub der Elektroschrauber (22, 23) vorzugsweise mit Pneumatikzylindern (40.1) und von der Druckluftquelle (41) vorgenommen und von der Steuerung (32) über die Druckluft-Ventile (37, 38) vollzogen wird.

10. Zustellbare Kalibrierroboter für Breitschlitz-Düsen nach den Ansprüchen 1 bis 9 **dadurch gekennzeichnet, dass** die Brücke (14) Kühlkanäle (45, 46) aufweist, in die das Gebläse (27) Luft aus der Umgebung zur Kühlung der Brücke (14) drückt.
